# FASCICULE DE BREVET EUROPEEN

(11) **EP 0 595 403 B1**
(45) Date de publication et mention de la délivrance du brevet: **17.02.1999**
(21) Numéro de dépôt: 93202932.5
(22) Date de dépôt: 20.10.1993
(51) Int. Cl.: H04N 7/24

(54) **Dispositif de codage de signaux numériques représentatifs d'images, et dispositif de décodage correspondant**
Einrichtung zur Kodierung von digitalen bilddarstellenden Signalen und entsprechende Dekodierungseinrichtung
Device for coding digital signals representative of images and corresponding decoding device

(30) Priorité: 28.10.1992 FR 9212880
(43) Date de publication de la demande: 04.05.1994
(73) Titulaire: LABORATOIRES D'ELECTRONIQUE PHILIPS S.A.S., 94450 Limeil-Brévannes (FR); Koninklijke Philips Electronics N.V., 5621 BA Eindhoven (NL)
(72) Inventeur: Fert, Etienne, Société Civile S.P.I.D., F-75008 Paris (FR)
(74) Mandataire: Landousy, Christian

(56) Documents cités:
- EP-A- 0 235 803
- EP-A- 0 474 100
- WO-A-92/07445
- US-A- 4 723 161
- US-A- 5 122 875
- US-A- 5 148 272
- SIGNAL PROCESSING. IMAGE COMMUNICATION vol. 3, no. 2/3 , Juin 1991 , AMSTERDAM NL pages 179 - 195 G.MORRISON ET AL. 'Two-Layer video coding for ATM networks'
- IEEE GLOBAL TELECOMMUNICATIONS CONFERENCE 1988, HOLLYWOOD, FLORIDA; vol. 2/3 , 28 Novembre 1988 , IEEE, NEW YORK, USA; pages 743 - 749 TZOU ET AL. 'Compatible HDTV coding for broadband ISDN'

## Description

La présente invention concerne un dispositif de codage de signaux numériques correspondant à des images subdivisées en blocs, composé d'une première voie de codage comprenant un circuit de transformation cosinus discrète, un circuit de quantification avec un premier pas de quantification déterminé, un circuit de codage à longueur variable, une mémoire-tampon délivrant des signaux codés de niveau de qualité déterminé, et un circuit de régulation de débit, d'une voie de prédiction comprenant en sortie dudit circuit de quantification, un premier circuit de quantification inverse, un circuit de transformation cosinus discrète inverse, un premier additionneur, une mémoire d'image, un étage de compensation de mouvement, et un soustracteur prévu pour retrancher desdits signaux numériques à coder les signaux prédits de sortie dudit étage, et d'une deuxième voie de codage comprenant elle-même notamment un circuit de calcul de différences à partir de signaux situés en aval du circuit de transformation cosinus discrète, un circuit de quantification de ces différences avec un deuxième pas de quantification plus fin que le premier, et un circuit de codage des différences ainsi quantifiées. Cette invention est utilisable notamment pour la distribution d'images de télévision selon deux niveaux de qualité d'image et est compatible avec la norme MPEG.

Pour la transmission d'images dans un canal numérique, il est nécessaire, compte tenu du débit des canaux existants, de comprimer l'information contenue dans ces images. Il existe à cet effet de nombreuses techniques de codage, et l'une des plus utilisées actuellement met en oeuvre successivement une transformation mathématique dite transformation cosinus discrète (DCT, en anglais), puis une quantification des coefficients obtenus par ladite transformation et un codage à longueur variable des valeurs ainsi quantifiées, ces opérations étant complétées par une prédiction temporelle opérée à partir desdites valeurs quantifiées et qui permet de présenter au codage non pas les signaux qui correspondent à chaque image courante, mais des signaux représentatifs des différences entre cette image courante et l'image précédente, compte tenu du mouvement intervenu entre elles deux dans l'intervalle de temps qui les sépare.

Le brevet des Etats-Unis d'Amérique n° US-A-4 958 226 décrit un dispositif de cette nature. Sa structure, incluant initialement la première voie de codage et la voie de prédiction pour l'obtention d'un premier niveau de qualité d'image, comprend également une deuxième voie de codage d'une grandeur dite erreur résiduelle et prélevée dans ladite première voie de codage. L'image ultérieurement décodée et restituée bénéficie ainsi d'une information complémentaire autorisant l'obtention d'un deuxième niveau de qualité d'image.

Un but de l'invention est de proposer un dispositif de codage perfectionné permettant d'améliorer le deuxième niveau de qualité d'image.

A cet effet l'invention concerne un dispositif de codage tel que défini ci-dessus dans le préambule de la description et qui est en outre caractérisé en ce que la voie de prédiction comprend également, entre la sortie dudit circuit de quantification des différences et ledit circuit de transformation cosinus discrète inverse, une branche supplémentaire comprenant un deuxième circuit de quantification inverse des signaux de sortie dudit circuit de quantification des différences et un deuxième additionneur des sorties desdits premier et deuxième circuits de quantification inverse, la sortie dudit deuxième additionneur étant reliée à l'entrée dudit circuit de transformation cosinus discrète inverse.

La structure ainsi proposée consiste à mettre en place dans le codeur une branche de rétroaction supplémentaire qui prélève les informations traitées par la deuxième voie de codage pour les combiner avec celles traitées par la voie de prédiction et assurer ainsi une prédiction plus précise.

Le document EP-A-0474100 décrit, certes, un dispositif de codage tel que défini précédemment dans le préambule de la description. Il faut cependant noter qu'il ne mentionne pas la présence d'une branche supplémentaire permettant, grâce à une compensation de mouvement plus précise puisqu'elle prend en compte non seulement la quantification initiale mais aussi la quantification supplémentaire réalisée à partir de l'erreur de prédiction résiduelle, d'améliorer la précision de la prédiction et donc le deuxième niveau de qualité d'image. En outre, contrairement à la solution décrite dans la présente demande, le dispositif décrit dans ledit document n'est pas compatible avec le standard MPEG.

Un autre but de l'invention est de proposer un dispositif de décodage de signaux préalablement codés à l'aide d'un dispositif de codage ayant la structure définie ci-dessus.

Ce dispositif de décodage, composé d'une première voie de décodage comprenant en série un circuit de décodage à longueur variable, un troisième circuit de quantification inverse selon ledit pas de quantification déterminé, un circuit de transformation cosinus discrète inverse, et un étage de compensation de mouvement comprenant lui-même un circuit de compensation de mouvement et un troisième additionneur qui reçoit sur une première entrée la sortie dudit circuit de transformation cosinus discrète inverse et sur une deuxième entrée la sortie dudit circuit de compensation de mouvement et qui délivre les signaux décodés envoyés d'une part vers la sortie du dispositif de décodage et d'autre part, par l'intermédiaire d'une mémoire d'image, vers l'entrée dudit circuit de compensation de mouvement est, selon l'invention, plus spécialement caractérisé en ce qu'il comprend une deuxième voie de décodage comprenant elle-même en série un deuxième circuit de décodage à longueur variable, un quatrième circuit de quantification inverse selon ledit pas de quantification plus fin que le premier, et un quatrième additionneur, ledit quatrième additionneur recevant sur ses deux entrées les sorties desdits troisième et quatrième circuits de quantification inverse et ses signaux de sortie étant fournis à l'entrée dudit circuit de transformation cosinus discrète inverse.

Les particularités et avantages de l'invention apparaîtront maintenant de façon plus détaillée dans la description qui suit et dans les dessins, donnés à titre d'exemples non limitatifs et dans lesquels :
- la figure 1 montre une exemple de réalisation d'un dispositif de codage selon l'invention ;
- la figure 2 montre un exemple de réalisation d'un dispositif de décodage selon l'invention.

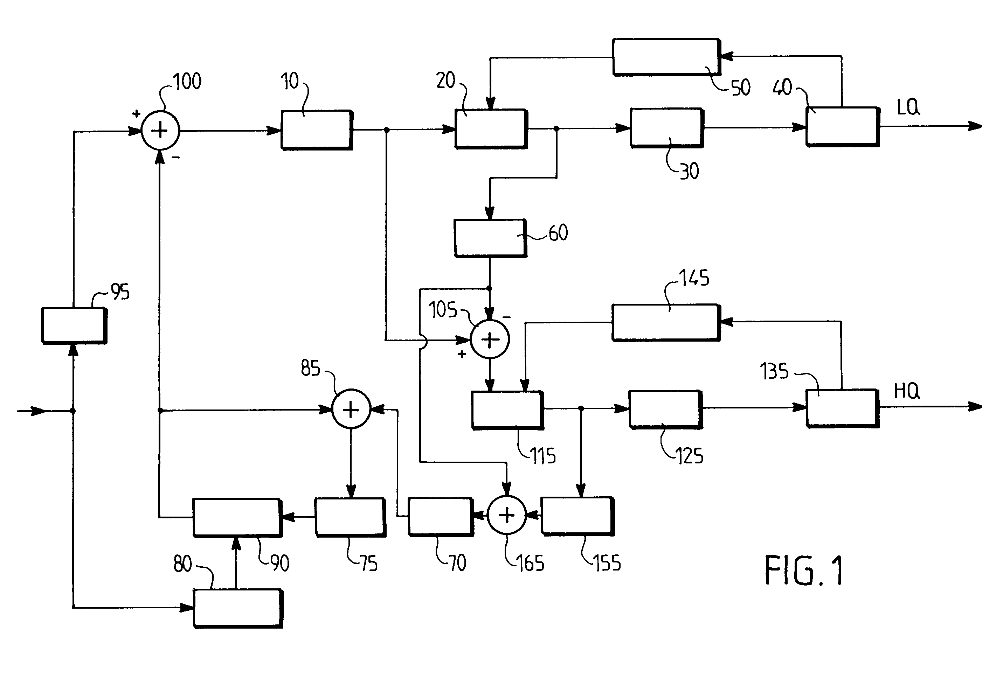

Le dispositif de codage représenté sur la figure 1 comprend tout d'abord un circuit 10 de transformation cosinus discrète. Cette transformation, effectuée à partir de blocs d'image ici de format 8 x 8 point d'image (ou pixels), assure la conversion des signaux numériques reçus sur son entrée (et correspondant à des images) en un bloc de 8 x 8 coefficients, dont le premier représente la valeur moyenne des niveaux de gris des pixels du bloc considéré et dont les soixante-trois autres représentent les différentes fréquences spatiales présentes dans ce bloc.

Un circuit de quantification 20 assure alors la quantification de chacun de ces coefficients de sortie du circuit 10. Cette quantification est liée d'une part à la position du coefficient considéré dans le bloc 8 x 8 (les hautes fréquences spatiales sont moins perceptibles par l'oeil humain et la quantification des coefficients correspondants peut donc être effectuée avec un pas de quantification plus grand donnant une quantification moins précise) et d'autre part à un facteur de quantification, lié au débit comme on le décrit ci-dessous. Les valeurs issues de cette quantification sont alors fournies à un circuit 30 de codage à longueur variable, en sortie duquel est prévue une mémoire-tampon 40 de stockage des mots codés. En fonction du remplissage de cette mémoire 40, un circuit de régulation de débit 50 prévu en sortie de ladite mémoire renvoie vers le circuit de quantification 20 le facteur de quantification mentionné plus haut et dont la valeur, liée à ce remplissage, permet une modification du pas de quantification de façon que ladite mémoire 40 ne déborde ni ne se vide. Une telle chaîne de codage avec régulation du débit est décrite par exemple dans la demande de brevet européen EP-0448491 et ne le sera donc pas davantage ici. Les signaux de sortie de la mémoire 40 sont des signaux codés, correspondant à un niveau de qualité déterminé noté LQ sur la figure 1.

Les valeurs issues de la quantification sont également fournies à une voie de prédiction comprenant tout d'abord un circuit de quantification inverse 60. Un soustracteur 105 permet alors de calculer la différence entre les coefficients d'origine présents en sortie du circuit de transformation cosinus discrète 10 et, en sortie du circuit 60, ces mêmes coefficients après quantification puis quantification inverse. Ces différences sont alors envoyées, pour une quantification plus fine et un codage de ces nouvelles valeurs quantifiées, vers une deuxième chaîne de codage. De façon similaire à la précédente, cette dernière comprend un deuxième circuit de quantification 115, avec un pas de quantification plus fin que celui du premier circuit de quantification, suivi d'un deuxième circuit 125 de codage à longueur variable, en sortie duquel est prévu une mémoire-tampon 135. En fonction du remplissage de cette mémoire 135, un deuxième circuit de régulation 145 renvoie vers le deuxième circuit de quantification 115 un facteur de quantification. Comme précédemment, ce facteur conjugue ses effets avec ceux du choix du pas de quantification pour assurer la régulation du débit de la mémoire 135. En raison de la quantification complémentaire plus fine réalisée par le circuit 115, les signaux de sortie de cette mémoire 135 sont des signaux codés correspondant à un niveau de qualité noté HQ et supérieur à celui observé en sortie de la première mémoire 40.

Conformément à l'invention, un additionneur 165 permet alors de calculer la somme des coefficients présents en sortie du circuit de quantification inverse 60 et des coefficients présents en sortie d'un deuxième circuit 155 de quantification inverse disposé en sortie du deuxième circuit de quantification 115. Cette somme est envoyée vers la voie de prédiction, plus précisément vers un circuit de transformation cosinus discrète inverse 70 assurant une conversion inverse de celle exécutée par le circuit 10, c'est-à-dire restituant à partir des coefficients DCT des signaux numériques correspondant à des blocs de 8 x 8 pixels. Ces signaux sont envoyés vers une première entrée d'un additionneur 85 dont la sortie est stockée dans une mémoire d'image 75.

La sortie de cette mémoire 75 est envoyée vers un étage de compensation de mouvement qui comprend un circuit d'estimation de mouvement 80 et un circuit de compensation de mouvement 90 (c'est ce circuit 90 qui, sur une première entrée, reçoit la sortie de ladite mémoire 75). Le circuit 80 reçoit ici les signaux numériques d'entrée du dispositif de codage et détermine ici, pour chaque bloc d'image, un vecteur de déplacement représentatif de son mouvement par rapport au bloc correspondant de l'image précédente (cette détermination est connue sous le nom de reconnaissance bloc à bloc, ou "block matching" en anglais). Le vecteur ainsi déterminé est envoyé vers la deuxième entrée du circuit de compensation de mouvement 90, et celui-ci délivre un bloc prédit dont la différence avec le bloc précédent est déterminée dans un soustracteur 100 placé en amont du circuit de transformation cosinus discrète 10. Le bloc prédit est également renvoyé vers une deuxième entrée de l'additionneur 85.

Le soustracteur 100 reçoit sur une première entrée la sortie d'un circuit 95 de conversion de format qui, lui-même, reçoit les signaux numériques d'entrée du dispositif, correspondant à des images pour les présenter, à sa sortie, par blocs. Les signaux numériques présents sur l'entrée du circuit 10 ne sont donc pas les signaux d'entrée du dispositif de codage, correspondant aux blocs d'image successifs, mais des signaux représentant la différence entre chaque bloc d'image d'origine et le bloc prédit qui en est déduit après les opérations effectuées dans la voie de prédiction (allant de l'entrée du circuit de quantification inverse 60 à la sortie du circuit de compensation de mouvement 90).

En l'absence des éléments 105 à 165, la voie qui comprend les circuits 60, 70, 75, 80, 85, 90 constituerait une voie de prédiction classique. La mise en place des éléments 105 à 165 permet d'opérer une quantification améliorée, plus fine, à partir de laquelle sont effectués d'une part le codage complémentaire conduisant, en sortie de la mémoire 135, aux signaux codés de qualité renforcée et d'autre part, conformément à l'invention, une prédiction plus précise que ladite prédiction classique.

Bien entendu, la présente invention n'est pas limitée à l'exemple de réalisation décrit et représenté. L'invention concerne également un dispositif de décodage apte à décoder des signaux préalablement codés à l'aide d'un dispositif tel que celui de la figure 1.

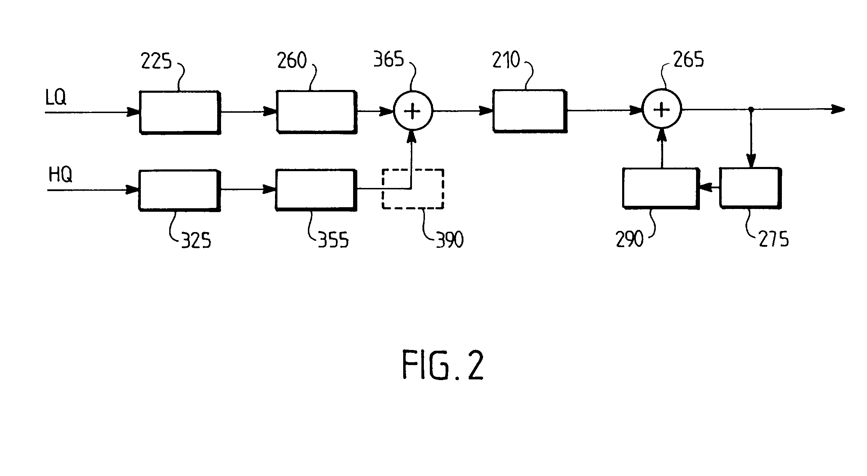

Un exemple de réalisation d'un tel dispositif de décodage est représenté sur la figure 2. Ce dispositif comprend, dans cet exemple, tout d'abord une première voie de décodage, comprenant en série un circuit 225 de décodage à longueur variable, un troisième circuit 260 de quantification inverse selon ledit pas de quantification déterminé, un circuit 210 de transformation cosinus discrète inverse, et un étage de compensation de mouvement. Cet étage comprend lui-même un circuit 290 de compensation de mouvement, délivrant comme au codage l'information de prédiction, et un troisième additionneur 265 qui reçoit sur ses deux entrées la sortie du circuit de quantification inverse et celle dudit circuit de compensation de mouvement. Cet additionneur 265 délivre les signaux décodés envoyés d'une part vers la sortie du dispositif de décodage et d'autre part, par l'intermédiaire d'une mémoire d'image 275, vers l'entrée dudit circuit de compensation de mouvement. Le dispositif de décodage comprend également une deuxième voie de décodage comprenant, elle, en série, un deuxième circuit 325 de décodage à longueur variable, un quatrième circuit 355 de quantification inverse selon ledit pas de quantification plus fin que le premier, et un quatrième additionneur 365. Cet additionneur reçoit sur ses deux entrées les sorties desdits troisième et quatrième circuits de quantification inverse 260 et 355, et ses signaux de sortie sont fournis à l'entrée du circuit 210 de transformation cosinus discrète inverse.

Dans ce dispositif de décodage, la première voie de décodage reçoit les signaux codés correspondant au niveau de qualité déterminé noté précédemment LQ, et la deuxième voie de décodage reçoit les signaux codés correspondant au niveau de qualité amélioré noté précédemment HQ. L'addition des informations ainsi décodées dans chacune des deux voies permet de reconstruire en sortie du dispositif de décodage des images ayant cette qualité dite de niveau amélioré. Si, pour une raison quelconque, on est en mesure de ne recevoir que les signaux codés dits LQ qui bénéficient d'un niveau de protection accru lors de leur transmission, un interrupteur 390, représenté en trait interrompu sur la figure 2, permet de mettre hors circuit la deuxième voie de décodage. Cette figure 2 est alors ramenée au schéma classique, à une seule voie de décodage recevant lesdits signaux codés LQ et ne délivrant que des images reconstituées ayant la qualité LQ dite de niveau déterminé.

## Revendications

1. Dispositif de codage de signaux numériques correspondant à des images subdivisées en blocs, composé d'une première voie de codage comprenant un circuit (10) de transformation cosinus discrète, un circuit (20) de quantification avec un premier pas de quantification déterminé, un circuit (30) de codage à longueur variable, une mémoire-tampon (40) délivrant des signaux codés de niveau de qualité déterminé, et un circuit (50) de régulation de débit, d'une voie de prédiction comprenant, en sortie dudit circuit de quantification, un premier circuit (60) de quantification inverse, un circuit (70) de transformation cosinus discrète inverse, un premier additionneur (85), une mémoire d'image (75), un étage de compensation de mouvement (80, 90), et un soustracteur (100) prévu pour retrancher desdits signaux numériques à coder les signaux prédits de sortie dudit étage, et d'une deuxième voie de codage comprenant elle-même notamment un circuit (105) de calcul de différences à partir de signaux situés en aval du circuit de transformation cosinus discrète, un circuit (115) de quantification de ces différences, avec un deuxième pas de quantification plus fin que le premier, et un circuit (125) de codage des différences ainsi quantifiées, caractérisé en ce que la voie de prédiction comprend également, entre la sortie dudit circuit de quantification des différences et ledit circuit de transformation cosinus discrète inverse, une branche supplémentaire comprenant un deuxième circuit (155) de quantification inverse des signaux de sortie dudit circuit de quantification des différences et un deuxième additionneur (165) des sorties desdits premier et deuxième circuits de quantification inverse, la sortie dudit deuxième additionneur étant reliée à l'entrée dudit circuit de transformation cosinus discrète inverse.

2. Dispositif de décodage de signaux préalablement codés à l'aide d'un dispositif de codage selon la revendication 1, composé d'une première voie de décodage comprenant en série un circuit (225) de décodage à longueur variable, un troisième circuit (260) de quantification inverse selon ledit pas de quantification déterminé, un circuit (210) de transformation cosinus discrète inverse, et un étage de compensation de mouvement comprenant lui-même un circuit (290) de compensation de mouvement et un troisième additionneur (265) qui reçoit sur une première entrée la sortie dudit circuit de transformation cosinus discrète inverse et sur une deuxième entrée la sortie dudit circuit de compensation de mouvement et qui délivre les signaux décodés envoyés d'une part vers la sortie du dispositif de décodage et d'autre part, par l'intermédiaire d'une mémoire d'image (275), vers l'entrée dudit circuit de compensation de mouvement, caractérisé en ce qu'il comprend une deuxième voie de décodage comprenant elle-même en série un deuxième circuit (325) de décodage à longueur variable, un quatrième circuit (355) de quantification inverse selon ledit pas de quantification plus fin que le premier, et un quatrième additionneur (365), ledit quatrième additionneur recevant sur ses deux entrées les sorties desdits troisième et quatrième circuits de quantification inverse et ses signaux de sortie étant fournis à l'entrée dudit circuit de transformation cosinus discrète inverse.

3. Dispositif de décodage selon la revendication 2, caractérisé en ce que la deuxième voie de décodage comprend en série, entre le quatrième circuit (355) de quantification inverse et le quatrième additionneur (365), un interrupteur (390) de mise hors circuit de ladite deuxième voie.

## Patentansprüche

1. Einrichtung zur Kodierung von digitalen bilddarstellenden, in Blöcke unterteilten Signalen, zusammengesetzt aus einem ersten Kodierungsweg mit einer diskreten Kosinus-Transformationsschaltung (10), einer Quantifizierungsschaltung (20) mit einem ersten bestimmten Quantifizierungsschritt, einer Kodierungsschaltung (30) variabler Länge, einem Pufferspeicher (40) zur Abgabe kodierter Signale mit einem bestimmten Qualitätsniveau und einer Datenflußregelschaltung (50) eines vorbestimmten Weges, mit am Ausgang der besagten Quantifizierungsschaltung einer ersten umgekehrten Quantifizierungsschaltung (60), einer umgekehrten diskreten Kosinus-Transformationsschaltung (70), einem ersten Addierer (85), einem Bildspeicher (75), einer Bewegungsausgleichsstufe (80, 90), und einem Subtrahierer (100), vorgesehen, um den besagten zu kodierenden digitalen Signalen die vorbestimmten Signale am Ausgang der besagten Stufe zu entnehmen, und einer zweiten Kodierungsstufe, die selbst insbesondere eine Schaltung (105) zur Berechnung der Differenzen ausgehend von den nach der diskreten Kosinus-Transformationsschaltung gelegenen Signalen enthält, eine Schaltung (115) zur Quantifizierung dieser Differenzen mit einem zweiten Quantifizierungsschritt, der feiner als der erste ist, und einer Schaltung (125) zur Kodierung der so quantifizierten Differenzen, dadurch gekennzeichnet, daß der Vorbestimmungsweg zudem zwischen dem Ausgang der besagten Schaltung zur Quantifizierung der Differenzen und der besagten umgekehrten diskreten Kosinus-Transformationsschaltung einen zusätzlichen Zweig aufweist, der eine zweite umgekehrte Quantifizierungsschaltung (155) der Signale am Ausgang der besagten Schaltung zur Quantifizierung der Differenzen und einen zweiten Addierer (165) der Ausgänge der besagten ersten und zweiten umgekehrten Quantifizierungsschaltungen enthält, wobei der Ausgang des besagten zweiten Addierers mit dem Eingang der besagten umgekehrten diskreten Kosinus-Transformationsschaltung verbunden ist.

2. Einrichtung zum Dekodieren von Signalen, die unter Zuhilfenahme einer Kodierungseinrichtung nach Anspruch 1 zuvor kodiert wurden, bestehend aus einem ersten Dekodierungsweg mit in Serie einer Dekodierungsschaltung (225) variabler Länge, einer dritten umgekehrten Quantifizierungsschaltung (260) nach dem besagten bestimmten Quantifizierungsschritt, einer umgekehrten diskreten Kosinus-Transformationsschaltung (210) und einer Bewegungsausgleichsstufe, selbst mit einer Bewegungsausgleichsschaltung (290) versehen, und einem dritten Addierer (265), der an einem ersten Eingang den Ausgang der besagten umgekehrten diskreten Kosinus-Transformationsschaltung und an einem zweiten Eingang den Ausgang der besagten Bewegungsausgleichsschaltung erhält und die dekodierten Signale abgibt, einerseits zum Ausgang der Dekodierungseinrichtung und andererseits, über einen Bildspeicher (275), zum Eingang der besagten Bewegungsausgleichsschaltung geleitet, dadurch gekennzeichnet, daß sie einen zweiten Dekodierungsweg aufweist, der selbst in Serie eine zweite Dekodierungsschaltung (325) variabler Länge enthält, eine vierte umgekehrte Quantifizierungsschaltung (355) nach dem besagten Quantifizierungsschritt, der feiner als der erste ist, und einen vierten Addierer (365), wobei der besagte vierte Addierer an seinen beiden Eingängen die Ausgänge der besagten dritten und vierten umgekehrten Quantifizierungsschaltungen erhält und seine Ausgangssignale an den Eingang der besagten umgekehrten diskreten Kosinus-Transformationsschaltung geleitet werden.

3. Dekodierungseinrichtung nach Anspruch 2, dadurch gekennzeichnet, daß der zweite Dekodierungsweg in Serie zwischen der vierten umgekehrten Quantifizierungsschaltung (355) und dem vierten Addierer (365) einen Schalter (390) zum Abschalten des besagten zweiten Weges enthält.

## Claims

1. A device for encoding digital signals corresponding to images subdivided into blocks, which device is composed of a first encoding channel comprising a discrete cosine transform circuit (10), a quantizing circuit (20) having a determined first quantization step, a variable-length encoding circuit (30), a buffer memory (40) supplying encoded signals having a determined quality level, and a rate control circuit (50), a prediction channel comprising, at the output of said quantizing circuit, a first inverse quantizing circuit (60), an inverse discrete cosine transform circuit (70), a first adder (85), a picture memory (75), a motion compensation stage (80,90), and a subtracter (100) for subtracting the predicted output signals of said stage from said digital signals to be encoded, and a second encoding channel comprising a circuit (105) for computing the differences on the basis of signals downstream of the discrete cosine transform circuit, a circuit (115) for quantizing these differences with a second quantization step which is finer than the first step, and a circuit (125) for encoding the differences thus quantized, characterized in that the prediction channel also comprises, between the output of said circuit for quantizing the differences and said inverse discrete cosine transform circuit, a supplementary branch comprising a second circuit (155) for inverse quantization of the output signals of said circuit for quantizing the differences, and a second adder (165) for adding the output signals of said first and second inverse quantizing circuits, the output of said second adder being connected to the input of said inverse discrete cosine transform circuit.

2. A device for decoding signals previously encoded by means of an encoding device as claimed in claim 1, which device is composed of a first decoding channel comprising, in series, a variable-length decoding circuit (225), a third inverse quantizing circuit (260) operating in accordance with said determined quantization step, an inverse discrete cosine transform circuit (210), and a motion compensation stage comprising a motion compensation circuit (290), and a third adder (265), a first input of which receives the output signal of said inverse discrete cosine transform circuit and a second input of which receives the output signal of said motion compensation circuit and which supplies the decoded signals applied to the output of the decoding device and, via a picture memory (275), to the input of said motion compensation circuit, characterized in that it comprises a second decoding channel comprising, in series, a second variable-length decoding circuit (325), a fourth inverse quantizing circuit (355) operating in accordance with said quantization step which is finer than the first step, and a fourth adder (365) whose two inputs receive the output signals of said third and fourth inverse quantizing circuits and whose output signals are applied to the input of said inverse discrete cosine transform circuit.

3. A decoding device as claimed in claim 2, characterized in that the second decoding channel comprises, in series, a switch (390) for rendering said second channel inoperative, which switch is arranged between the fourth inverse quantizing circuit (355) and the fourth adder (365).
